# EUROPEAN PATENT APPLICATION

(11) **EP 1 365 318 A2**
(43) Date of publication of application: **26.11.2003**
(21) Application number: 03253218.6
(22) Date of filing: 22.05.2003
(51) Int. Cl.: G06F 9/30

(54) **Microprocessor data manipulation matrix module**

(30) Priority: 23.05.2002 US 154774
(71) Applicant: Sun Microsystems, Inc., Santa Clara, California 95054 (US)
(72) Inventor: Spracklen, Lawrence, Sunnyvale, California 94086 (US)
(74) Representative: W.P. THOMPSON & CO.

(57) **Abstract**

Embodiments of the present invention provide a method and structure for performing data element manipulation and preprocessing on a microprocessor architecture that supports Single Instruction Multiple Data (SIMD) operations. According to the principles of the present invention, a microprocessor data manipulation matrix module provides inherent data manipulation functionality to SIMD instructions. The data manipulation matrix module permits SIMD instructions themselves to direct and manage any necessary operand data element preprocessing, such as data element alignment. By the present invention, separate SIMD data element manipulation of the prior art is superfluous.

## Description

### BACKGROUND

### Field of the invention

The present invention relates to microprocessor systems for processing data and, in particular, to systems for alignment, formatting, and manipulation of data for single instruction, multiple data (SIMD) processing.

### Background Art

Early computer processors (also called microprocessors) included a central processing unit (CPU) that executed only one instruction at a time. An instruction is a statement received by a microprocessor that indicates an operation or action for the microprocessor to execute. An instruction includes references to source data (operands) on which the process or action is performed. In response to the need for improved performance, current microprocessors utilize techniques to extend the capabilities of the microprocessor to execute instructions. For example, microprocessor design architectures now typically provide for concurrent processing of multiple instructions in parallel as a means for enhancing performance.

Microprocessor architecture techniques used to provide parallel processing include pipelining, superpipelining, and superscaling. Pipelined microprocessor architectures break the execution of instructions into a number of stages or functional units wherein each stage corresponds to one task in the execution of the instruction. Pipelined designs increase the rate at which instructions execute by allowing a new instruction to begin execution before a previous instruction is finished executing. Superpipelined architectures extend pipelined architectures by breaking down each execution pipeline into even smaller stages. Superpipelining increases the number of instructions that execute in the pipeline at any given time.

Superscalar microprocessor architectures typically optimize some of the pipelines for specialized functions such as integer operations or floating- point operations. In some cases, architectures optimize execution pipelines for processing graphic, multimedia, or complex math instructions. Superscalar processors generally refer to a class of microprocessor architectures that include multiple pipelines. Superscalar processors allow simultaneous parallel instruction execution in two or more instruction execution pipelines. Microprocessor tasks perform in the superpipelined stages with the output of one stage supplying the input to the next. This speeds up processing by allowing several parts of different tasks to run at the same time. Consequently, the number of instructions that may be processed increases due to parallel execution. Superscalar processors typically execute more than one instruction per clock cycle, on average.

In addition, by providing a set of specialized instructions, certain operations may implement concurrently on multiple sets of data. This approach is known as single instruction, multiple data stream (SIMD) processing. SIMD distinguishes from the scalar, single instruction, single data stream (SISD) processing employed by earlier microprocessors. In the prior art, SISD instructions executed one instruction at a time on a single data operand set. A single SIMD instruction, capable of operating on multiple data sets in parallel, enhances microprocessor performance.

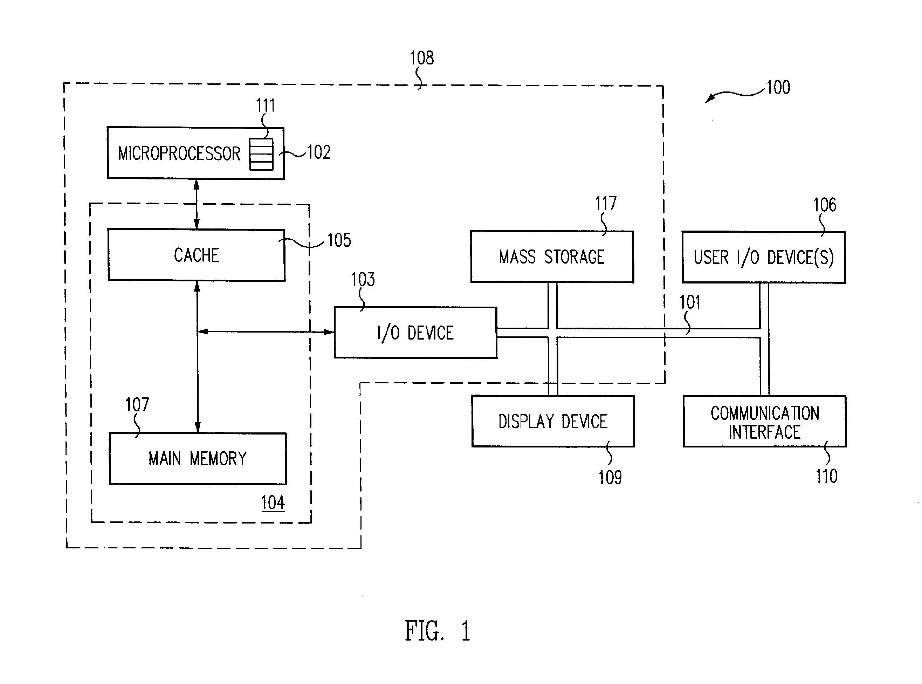

FIG. 1 shows a microprocessor computer system in accordance with the present invention. As shown in FIG. 1, a superpipelined, superscalar microprocessor computer system 100 can be represented as a collection of interacting functional units or stages. These functional units perform the functions of fetching instructions and loading data from memory 107 into microprocessor registers 111, executing the instructions, placing the results of the executed instructions into microprocessor registers 111, storing the register results in memory 107, managing these memory transactions, and interfacing with external circuitry and devices. For the purposes of this discussion, a register is small, high-speed computer circuit that holds values of internal operations, such as the instruction addresses, and the data processed by the execution stages.

Microprocessor computer system 100 further comprises an address/data bus 101 for communicating information, microprocessor 102 coupled with bus 101 through input/output (I/O) device 103 for processing data and executing instructions, and memory system 104 coupled with bus 101 for storing information and instructions for microprocessor 102. Memory system 104 comprises, for example, cache memory 105 and main memory 107.

In a typical microprocessor computer system 100, microprocessor 102, I/O device 103, memory system 104, and mass storage device 117, are coupled to bus 101 formed on a printed circuit board and integrated into a single housing as suggested by the dashed-line box 108. However, the particular components chosen to be integrated into a single housing is based upon market and design choices. Accordingly, it is expressly understood that fewer or more devices may be incorporated within the housing suggested by dashed line 108.

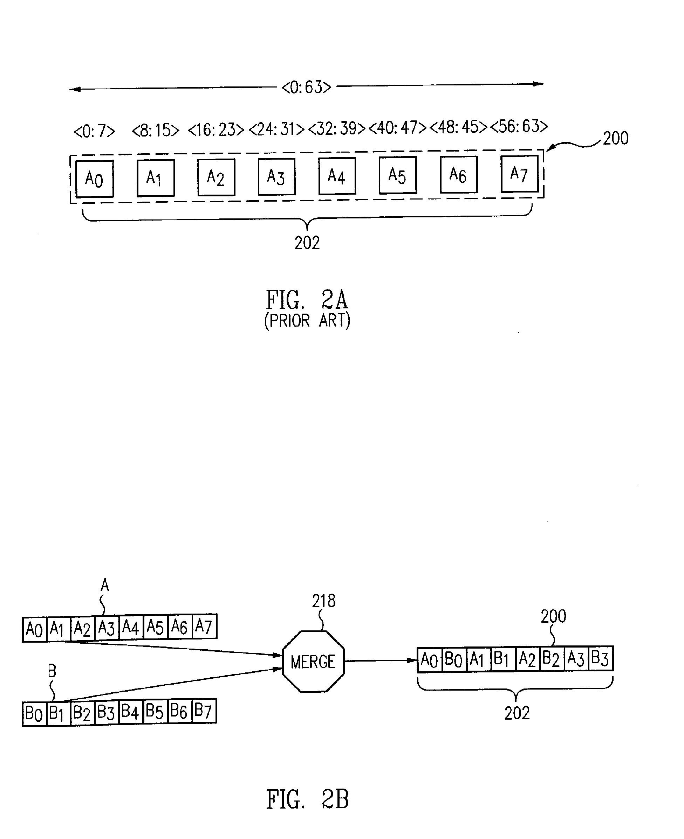

FIG. 2A is a schematic diagram illustrating a packed operand contained in a microprocessor register such as one of the registers 111 in microprocessor 102 of FIG. 1. A typical microprocessor instruction stipulates two registers from which operand data are sourced and one register for receiving the results of the instruction's action on the operand data. With SIMD instructions, variables are packed within a source register, as shown in FIG. 2A. Each operand register 200 contains multiple data element variables A₀ through A₇, each of which is a subpart of variable 202. A SIMD instruction can operate on multiple data elements A₀ through A₇ in parallel.

In the prior art, to operate efficiently, specialized SIMD instructions required a new data organization scheme. SIMD instructions required that the data provided to the instruction execution stages be accessible in a partitioned format. For example, a 64-bit (quad word) microprocessor may operate on a packed data block, which partitions into two 32-bit (double word) data operands, four 16- bit (word) data operands, or eight 8-bit (byte) data operands. If a 64 bit, quadword microprocessor has sufficient resources, it may execute SIMD instructions referencing two or more packed data blocks, e.g. four or more double word, eight or more word, or sixteen or more byte partitioned operands concurrently.

Typically, superscalar microprocessors include a group of registers that provide source data operands to, and receive results from, pipelined execution stages. As noted above, a register is small, high-speed computer circuit that holds values of internal operations, such as the instruction addresses, and the data processed by the execution stages. Superscalar microprocessors typically include a group of registers, sometimes referred to as a register file, for each major data type such as floating point or integer. Consequently, packed and unpacked operands fit in the same sized registers, despite the fact that a packed operand includes two or more component data elements, accessible to the microprocessor functional stages through SIMD instructions and partitioned within a packed data block.

SIMD instructions direct the functional stages of the microprocessor CPU to concurrently execute an operation upon the partitioned data element operands that it references. A SIMD instruction involving an arithmetic operation, such as partitioned addition, is one common type of SIMD instruction. SIMD instructions that move multiple data elements from location to location, for example from one memory location to another, or from a register to a memory location or functional stage within the CPU, are additional examples of instructions within a SIMD instruction set.

In many situations the requirement for some degree of data reorganization and reformatting is a necessary consequence of integrating SIMD instructions into an existing SISD applications. Consequently, data preprocessing prior to SIMD instruction execution is typically required. Data is often preprocessed for proper alignment, formatting, and organization into the packed data blocks required by a particular SIMD instruction. For SIMD implementations, data manipulation is crucial, for without the correct formatting, alignment, and relative positioning, the SIMD partitioned data parallel processing techniques fail to operate.

An example of a SIMD instruction useful for data manipulation is the "merge" instruction in the Visual Instruction Set (VIS) as implemented on a SUN UltraSparc microprocessor. FIG. 2B illustrates the operation of the VIS merge instruction. The VIS merge SIMD instruction combines two 32 bit (4-byte) wide operands by concurrently selecting alternating sequential byte data elements from each of the two registers containing the operands. As shown in FIG. 2B, merge instruction 218 interleaves, in parallel, four corresponding 8-bit (1-byte) data elements, such as data elements A₀ and B₀ contained within source registers A and B respectively, onto destination register 200 to produce a 64-bit (8-byte) operand result 202.

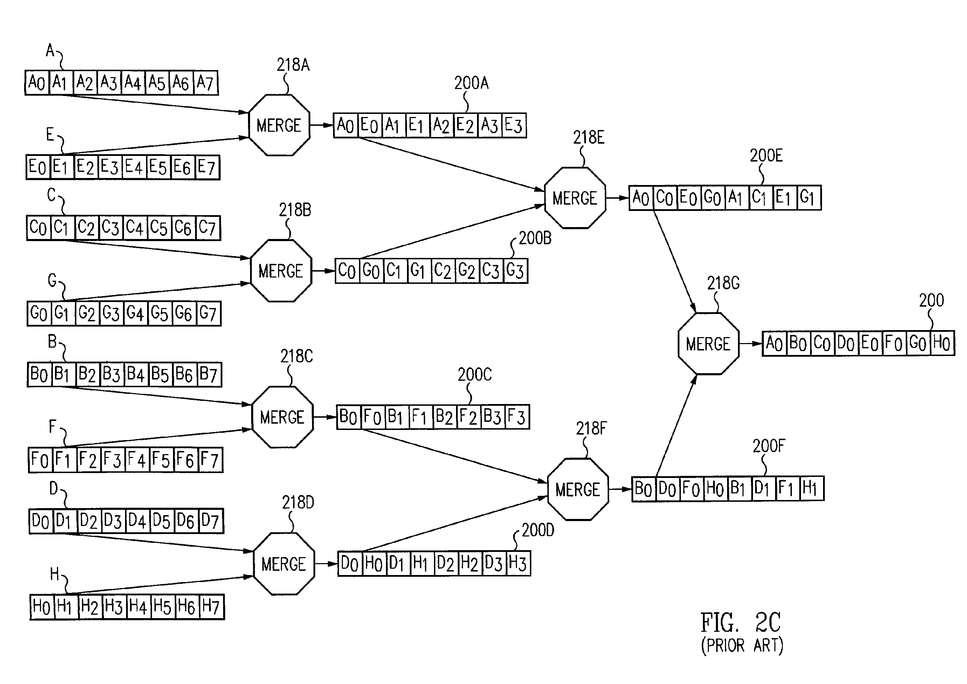

FIG. 2C illustrates the use of the prior art SIMD merge instruction in reordering data elements for use by another SIMD instruction. In the example shown, data element re-ordering is required for computing 2-dimensional discrete cosine transforms (2D DCTs), a core component of all video compression coding/decoding. When implemented using SIMD techniques, it is common practice to implement the 2D DCT as multiple 1 dimensional discrete cosine transforms (1D DCTs), performed in parallel using SIMD instructions. When computing 2D DCTs as a series of 1 D DCTs, it is necessary to perform a series of interim column based 1 DCTs and then perform a set of row based 1D DCTs upon the interim results produced by the column based set. For the column based 1D DCTS the data elements are generally correctly ordered for use with SIMD instructions. However, for row based 1D DCTs, it is not possible to readily perform transforms in parallel with the original data element organization. Rather, the data elements must first be transposed, i.e., rotated through 90 degrees, such that data element columns become data element rows. 1D DCTs can then be performed as before. These column to row transpose operations are time consuming and require that 1 element from each column be extracted to form the new row. In a 8 byte X 8 byte block of video pixels, this translates to taking 1 data element from each of eight 64 bit (8-byte) registers each containing eight 1-byte column data elements and packing them together to form an 8-byte row.

In FIG. 2C, similarly positioned column data elements, such as data elements A₀ through H₀ located in the first partitions of source registers A through H, respectively, are reordered sequentially in destination register 200. The reordering of data elements represents a first position data element column to row transposition. As shown a total of 7 merge operations, 218A through 218G, are required to complete the transposition. Six registers, 218A trough 218F, are required to contain intermediate results.

In the majority of scalar SISD implementations, there is essentially no requirement for data preprocessing. Yet, in the corresponding prior art SIMD implementations, execution of data manipulation preprocessing instructions can often account for a large proportion of the total microprocessor run time to complete an application. Some of this preprocessing is a consequence of SIMD instruction algorithmic requirements; with the remainder being a result of the application of SIMD methods to a SISD orientated data organization. Consequently, prior art data preprocessing may sacrifice a significant amount of the potential performance enhancement derived from SIMD parallel processing of partitioned data operands.

When the situation dictates data element preprocessing operations, such as in discrete cosign transforms, standard prior art practice was to hide as much of the associated overhead as possible by attempting to undertake the majority of the data element preprocessing in parallel with other aspects of the SIMD computation. By this approach the preprocessing required for iteration i+1 commences in parallel with the computation for the i^{th} iteration. This can potentially hide the entire data preprocessing overhead apart from that required for preparing the initial iteration, i.e., the start-up overhead. However, with many SIMD instruction algorithms, this approach was not always completely effective.

Consequently, under circumstances where it is highly probable that data element manipulation will be required and where even minimal preprocessing can have a significant negative impact on performance, it is apparent that SIMD oriented data manipulation preprocessing requires a new approach.

What is needed to fully realize the potential performance enhancement derived from SIMD parallel processing is a structure and method that reduces or eliminates the SIMD data manipulation overhead of the prior art.

### SUMMARY OF THE INVENTION

Embodiments of the present invention provide an innovative method and structure for performing data manipulation preprocessing on a microprocessor architecture that supports SIMD operations. According to the principles of the present invention, a microprocessor data manipulation matrix module provides new data manipulation functionality to SIMD instructions. The data manipulation matrix module of the present invention permits SIMD instructions themselves to direct and manage any necessary operand data preprocessing. By the present invention, separate SIMD data manipulation preprocessing of the prior art is superfluous.

According to one aspect of the invention there is provided a microprocessor module comprising: a source pool comprising a plurality of partitioned source registers containing a set of data elements; at least one partitioned destination register; at least one partitioned map variable register; a module control unit coupled to said source pool, said at least one partitioned destination register, and said partitioned map variable register; at least one map variable contained in said at least one partitioned map variable register, wherein said at least one map variable directs said module control unit to select a subset of said set of data elements from said source pool and to perform an ordered replication of said subset of said set of data elements onto said partitioned destination register.

According to a second aspect of the invention there is provided a microprocessor module comprising: a source pool comprising a plurality of partitioned source registers containing a set of data elements ; at least one partitioned destination register; at least one partitioned map variable register; a module control unit coupled to said source pool, said at least one partitioned destination register, and said at least one partitioned map variable register, wherein said module control unit comprises: a crossbar switch; and control circuitry coupled to said crossbar switch, wherein said control circuitry comprises a plurality of n to m decoders to decode said map variable; at least one map variable comprising an operand of a SIMD instruction and contained in said at least one partitioned map variable register, wherein said at least one map variable directs said module control unit to select a subset of said set of data elements from said source pool and to perform an ordered replication of said subset of said set of data elements onto said partitioned destination register.

According to a third aspect of the invention there is provided a microprocessor module within a microprocessor comprising: a source pool comprising a plurality of partitioned source registers containing a set of data elements; a module control unit coupled to said source pool and at least one functional unit of said microprocessor; at least one map variable specified by an operand of an SIMD instruction executable by said at least one functional unit of said microprocessor; wherein said at least one map variable directs said module control unit to select an ordered subset of said set of data elements and to send said ordered subset to said at least one functional unit; and wherein said at least one functional unit executes said SIMD instruction on said ordered subset of said set of data elements.

In one embodiment, the present invention provides an optional data manipulation mode to SIMD instructions. When the mode is selected, a SIMD instruction enables the data manipulation matrix module, which, in one embodiment of the invention, is part of the microprocessor. In one embodiment, the data manipulation matrix module includes a plurality of data source registers each containing multiple data elements and together forming a data element set, also referred to as a source pool. This plurality of source pool registers may be an extension of the typical existing microprocessor floating-point register file used by the microprocessor's floating-point stage. Alternatively, the source pool may include a separate bank of registers dedicated to the data manipulation matrix module of the present invention. According to one embodiment of the invention, the source pool is capable of receiving and containing partition data under microprocessor program control.

One embodiment of the data manipulation matrix module of the present invention further includes a module control unit and a one or more destination registers forming a destination register file. The destination register file is capable of receiving and containing partition data from the module control unit. In one embodiment of the invention, the module control unit provides replications, sometimes called mappings, of a subset of elements selected from the set of data elements forming the source pool as output elements within corresponding destination register partitions. According to one embodiment of the invention, the SIMD instructions specify the selection of data elements from the source pool, and the nature of their mapping onto the partitioned destination register.

In one embodiment of the data manipulation matrix module of the present invention the module control unit includes control circuitry and a control switch that implements the data element selection and mapping specified by the SIMD instruction.

According to one embodiment of the invention, when enabled, the data manipulation matrix module permits a SIMD instruction to execute, in parallel, on the mapped output elements contained in the destination register partitions rather than on the operands originally referenced by the SIMD instruction. When not enabled, the functionality of the data manipulation matrix module is not called and the SIMD instruction executes on the original operands referenced by the SIMD instruction without modification by the data manipulation matrix module.

In one embodiment of the invention, the selection of specific individual data elements within the source pool, for mapping as corresponding output elements within the destination register, is directed by a rapidly reconfigurable map variable. In this embodiment, the map variable is data element labels partitioned in one or more of the original operands referenced by the SIMD instruction at the enablement of the data manipulation matrix module. When enabled, the data manipulation matrix module identifies that an operand referenced in a SIMD instruction does not specify data to be operated on, but rather is a variable that contains information about which data elements from the source pool are to be mapped as output elements onto the various partition positions in the destination register. A specific map variable stipulates which data elements in the source pool should appear as output elements in the partitioned destination register. The ordering of the selected data elements as output elements in the destination register is implied by the position order of corresponding partitioned data element labels making up the map variable. In this embodiment of the present invention, for example, the most significant byte in the map variable will define the allocation of the most significant byte within the destination register.

When the microprocessor fetches a SIMD instruction, the data manipulation matrix module decodes the map variable in the original operand of the instruction and generates the requested mapping output. Selected data elements in the source pool are mapped as packed output elements within the partitioned destination registers.

Consequently, according to this embodiment of the invention, the SIMD instructions themselves, through their original operands, in effect request the desired output element ordering within the partitioned destination register from selected data elements within the source pool. In one embodiment of the invention, the partitioned data contained in the destination register, comprising selected data elements mapped from the source pool, are dispatched over the floating-point pipeline to the functional stage appropriate to the SIMD instruction invoked. In one aspect of this embodiment of the invention, one or more marker bits within a reserved field of the opcode of the SIMD instruction enable or disable the data manipulation matrix module for one or more original instruction operands.

In one embodiment of the invention, the data manipulation matrix module provides "non-blocking" mapping of selected data elements in the source pool onto a destination register. With non-blocking mapping any combination of source pool data elements may be replicated as packed output elements onto a destination register.

In one embodiment of the present invention, the data manipulation matrix module provides "multi-cast" mapping of selected data elements in the source pool onto the destination register. With Multi-cast mapping any individual data element in the source pool may be replicated as an output element onto multiple partitions within a destination register.

In one embodiment of the present invention, the data manipulation matrix module provides "byte wise" mapping of selected data elements in the source pool onto the destination register. Byte-wise mapping of data elements from the source pool onto partitions within the destination register requires source and destination register partitioning on one-byte boundaries. Replication of any selected data element byte onto any partition byte within a destination register is possible.

According to one embodiment of the invention, all mapping of selected data elements within the source pool as output elements within the partitioned destination register occurs in parallel within one microprocessor clock cycle. Consequently, the present invention eliminates the overhead attendant to the SIMD data manipulation preprocessing of the prior art.

Various embodiments of the data manipulation matrix module according to the invention are possible relative to alternative control switching means and control circuitry, and the number, size, location, and capabilities of the source and destination registers.

### BRIEF DESCRIPTION OF THE DRAWINGS

The accompanying drawings, which are incorporated in, and constitute a part of this specification, illustrate embodiments of the invention and, together with the description, serve to explain the principles of the invention. In the drawings:
FIG. 1 shows a microprocessor computer system in block diagram form in accordance with the present invention;
FIG. 2A is a schematic diagram illustrating a packed operand contained in a microprocessor register;
FIG. 2B is a schematic diagram illustrating the operation of a prior art SIMD merge instruction;
FIG. 2C is a schematic diagram illustrating the use of a prior art merge SIMD instruction in performing a reordering of column organized data elements to row organized data elements;
FIG. 3A is a schematic diagram illustrating data element manipulation functionality in accordance with the present invention;
FIG. 3B is a process flow diagram illustrating the actions of data element manipulation in accordance with the present invention;
FIG. 3C is a schematic diagram illustrating the use of a data manipulation matrix module in accordance with the present invention in performing a reordering of column organized data elements into row organized data elements;
FIG. 4 shows a data manipulation matrix module in block diagram form in accordance with one embodiment of the present invention;
FIG. 5 is a schematic diagram illustrating a crossbar type of control switch in accordance with one embodiment of the present invention;
FIG. 6A is a schematic diagram illustrating control circuitry in accordance with one embodiment of the present invention;
FIG. 6B is a schematic diagram illustrating an alternate form of control circuitry in accordance with one embodiment of the present invention;
FIG. 6C is a schematic diagram illustrating another alternate form of control circuitry in accordance with one embodiment of the present invention;
FIG. 6D is a schematic diagram illustrating another embodiment of control circuitry in accordance with one embodiment of the present invention.

### DETAILED DESCRIPTION

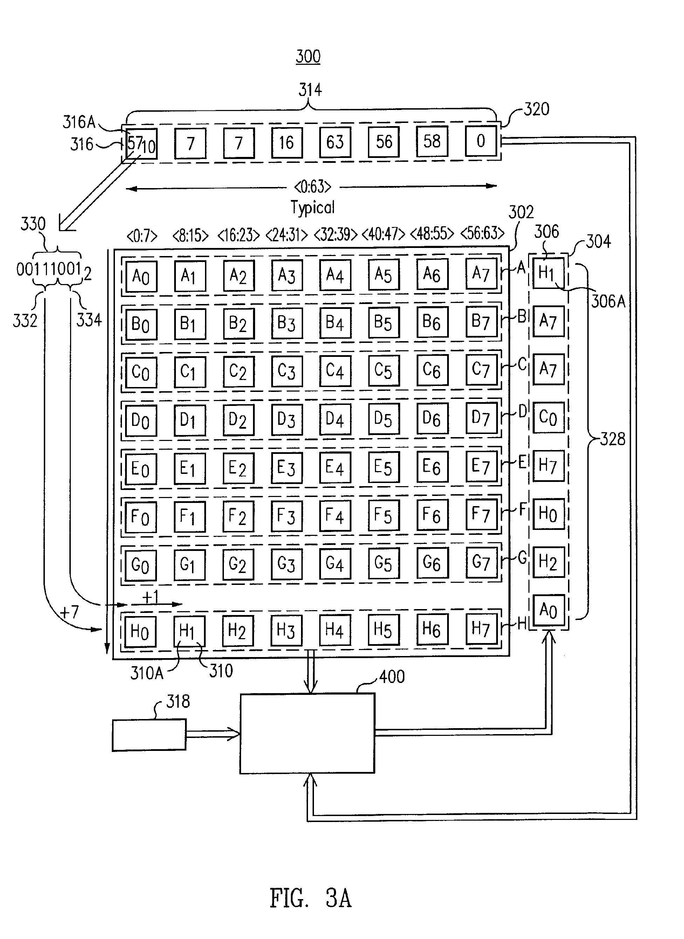

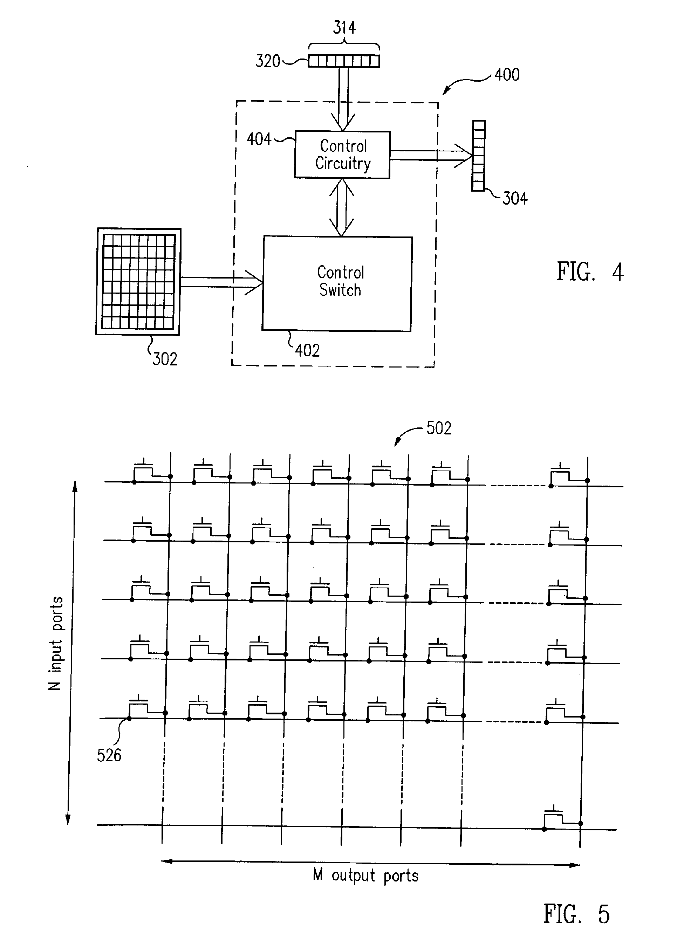

FIG. 3A is a schematic diagram illustrating data element manipulation functionality in accordance with one embodiment of the present invention. As shown in FIG. 3A, the present invention provides a method and structure for selecting and manipulating a set of data elements A₀ through H₇ contained within a plurality of partitioned source registers A through H making up a source pool 302. According to one embodiment of the invention, a method utilizing a microprocessor data manipulation matrix module 300 and specialized SIMD instructions 318 is employed. According to the method of the present invention, SIMD instruction 318 enables a mapping of a subset of data selected from the set of data elements A₀ through H₇ of source pool 302 onto a partitioned destination register 304. As a result of the mapping, destination register 304 contains packed output elements, such as exemplary output element 306A, in any desired sequence, for use as a manipulated operand 328 by SIMD instruction 318. According to one embodiment of the invention, a rapidly reconfigurable map variable 314 and module control unit (400 in FIG. 4) implement and dictate the nature of the mapping. Consequently, the potential performance enhancement derived from SIMD parallel processing in a microprocessor system is fully realized by the elimination or reduction of the data manipulation overhead associated with prior art SIMD data preprocessing.

As shown in FIG. 2A, the granularity of partitioned data within a register, such as register 200 in FIG. 2A, refers to the smallest subpart of operand 202 that can be accessed from register 200 by a SIMD instruction. For example, as shown in FIG. 2A, 64-bit wide register 200 contains eight 1-byte (8-bit) elements A₀ through A₇ at corresponding 8-bit data boundaries, <0:7>, <8:15>...<56:63>, resulting in 1-byte data granularity within register 200. With 1-byte data granularity, there is no opportunity for bit shuffling within individual data elements A₀ through A₇ contained in register 200.

For clarity of presentation, the present invention is generally described below in terms of 64-bit wide registers with 1-byte granularity (eight bytes per register). In addition, SIMD instructions are described in terms of instructions that operate in parallel on multiple 1-byte sub-parts of the 8-byte operands contained within these partitioned 64-bit registers. Finally, the present invention is described in terms of structures and methods particularly useful in superpipelined and superscalar microprocessor computer system 102, shown in block diagram form in FIG. 1. The particular examples presented represent implementations useful in high clock frequency operation and microprocessors that issue and executing multiple instructions per cycle. However, it is expressly understood that the inventive features of the present invention may be usefully embodied in a number of alternative microprocessor architectures and SIMD instruction sets that may benefit from the performance features of the present invention. For example, the VIS instruction set described above can process, in parallel, two instructions, each of which can stipulate two 8-byte (64-bit) operands. In this example, a source pool of thirty-two 8-byte registers, containing 256 data elements (32 x 8), would allow the data manipulation matrix module of the present invention to reorganized the data elements of all four operands, i.e., two instructions each with two operands, concurrently. Each instruction could source data elements for each of its two operands from the entire 32 register, 256 data element source pool. Accordingly, alternative embodiments of the present invention are equivalent to the particular embodiments shown and described herein.

As shown in FIG. 3A, when operating microprocessor computer system 100 (FIG. 1) using SIMD instruction 318 (FIG. 3A), which operates in parallel on multiple elements selected from source pool 302, one frequently finds that elements required for manipulated operand 328 are distributed among different partitioned source registers A through H. Consequently, with a register granularity of 1-byte and operand maximum size of eight 1-byte data elements, it may be necessary to source elements from all eight source registers A through H of source pool 302. There is a possibility that each of the eight 1-byte elements, selected from data elements A₀ through H₇ and required for manipulated operand 328 by SIMD instruction 318, could reside in a different 64-bit source register A through H. For example, as described above, reordering column organized data elements into row organized data elements to perform 2-Dimensional Discrete Cosine Transforms, requires sourcing one data element from each of eight different source registers.

Thus, according to the principles of the present invention, a mechanism by which each of the sixty-four, (8 registers by 8 bytes per register), possible 1-byte data elements A₀ through H₇ can be individually selected is identified.

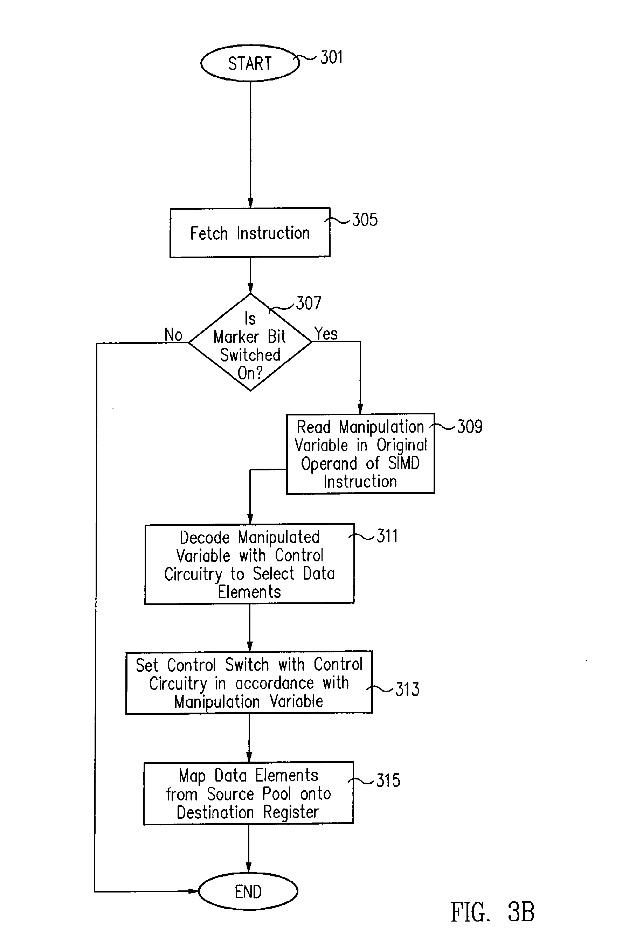

The method of one embodiment of the invention will now be described with reference to FIG.s 3A, 3B, and 4. As noted above, in one embodiment of the present invention, SIMD instruction 318 may enable mapping of select data elements within a source pool 302 as output elements within partitioned destination register 304 resulting in packed manipulated operand 328. FIG. 3A is a schematic diagram illustrating this data element manipulation functionality in one embodiment of the present invention. FIG. 3B is a process flow diagram illustrating the method of data element manipulation in accordance with the present invention. FIG. 4 shows a data manipulation matrix module in block diagram form in accordance with one embodiment of the present invention.

In FIGS. 3A and 3B, data manipulation matrix module 300 assembles eight 1-byte elements, selected from source pool 302 containing data elements A₀ through H₇, in any desired sequence within destination register 304. At start 301 in FIG. 3B, a new cycle of possible data manipulation is initiated. Under microprocessor control, data elements A₀ through H₇ reside in source registers A through H thereby creating source pool 302 (FIG. 3A). Destination register 304, which subdivides into eight 1-byte (8 bit) destination register partitions, such as exemplary destination register partition 306, is provided. The eight destination register partitions may each contain a 1-byte output element, such as exemplary output element 306A, comprising data "H₁". As noted source pool 302 includes eight source registers A through H. Each source register A through H is 64-bits wide and is divisible into eight source register partitions, such as exemplary source register partition 310. Each of the eight source register partitions of each of the eight source registers may contain a 1-byte (8-bit) data element, such as exemplary data element 310A, comprising data element "H₁". Consequently, source pool 302 contains a total of sixty-four data elements A₀ through H₇ (8 registers by 8 bytes per register)

After fetching a SIMD instruction 318 (FIG.3A) at 305 (FIG. 3B), at 307 in FIG. 3B, a determination is made whether a marker bit (not shown) in the opcode of instruction 318 (FIG. 3A) is switched "ON". If "No", data manipulation matrix module 300 (FIG. 3A) is not enabled and the process proceeds to "END" 317 (FIG. 3B). If at 307 the marker bit is found to be switched "ON", the method proceeds to 309 through 315, as explained in greater detail below, enabeling data manipulation matrix module 300 to replicate eight elements selected from data elements A₀ through H₇ within source pool 302 (FIG. 3A) as output elements within partitioned destination register 304. This operation is generally referred to as a mapping of selected data elements A₀ through H₇ to destination register 304. After the mapping of elements selected from data elements A₀ through H₇ in source pool 302, each destination register partition contains one of the selected data elements as an output element, such as output element 306A comprising data "H₁", as shown contained in exemplary destination register partition 306.

If each of the sixty-four data elements A₀ through H₇ is uniquely labeled, there is a means by which each of the 1-byte data elements A₀ through H₇ contained in source pool 302 can be individually identified and referenced. For example, the sixty-four data elements A₀ through H₇ may be uniquely labeled with an ascending number base 10 integer sequence from 0 to 63, respectively. With this labeling scheme, integer label "0", for example, corresponds to data element A₀, the first sequential data element in source pool 302; integer label "63" to data element H₇, the sixty fourth and last sequential data element in source pool 302; integer label "7" to data element A₇, the eighth sequential data element in source pool 302; integer label "16" to data element C₀; and integer labels "56", "57", and "58" to data elements H₀, H₁, and H₂, respectively.

By assembling a sequence of data element labels, such as exemplary data element label 316A comprising data "57₁₀" (integer fifty-seven expressed in number base 10), a selection and ordering of corresponding data elements A₀ through H₇ required for manipulated operand 328 of SIMD instruction 318 can be stipulated. In one embodiment of the present invention as shown in FIG. 3A, a map variable 314, comprising a sequence of data element labels, such as exemplary data element label 316A, is generated to describe a desired replication of elements selected from data elements A₀ through H₇ in source pool 302 as output elements, such as exemplary output element 306A, comprising packed manipulated operand 328. Referring back to FIG. 3B, at 309, map variable 314 is read and, at 311, decoded by data manipulation matrix module 300. After mapping, destination register 304 contains packed data of 1-byte granularity for use as manipulated operand 328 of SIMD instruction 318.

In FIG. 3A, SIMD instruction 318 may utilize separate map variables 314 to control the generation of multiple manipulated operands 328 of SIMD instruction 318. In one embodiment of the invention multiple map variables 314, may be utilized with multiple sources pools 302 to generate multiple manipulated operands 328 contained in multiple destination registers 304 for use by SIMD instruction 318. In one embodiment of the invention, the map variables 314 are the means by which data element A₀ through H₇ manipulation is specified to generate the output elements comprising manipulated operands 328. In one embodiment, each output element is defined by 1-byte in map variable 314, resulting in a map variable 314 that is the same size as the manipulated operand 328 to be generated.

In one embodiment of the present invention, map variable register 320 containing map variable 314 is conveniently referenced by the original operands of SIMD instruction 318. In one embodiment, SIMD instruction 318, when fetched, indicates that the original operands stipulated in instruction 318 do not reference data on which instruction 318 is to operate, but rather references partitioned map variable register 320. Map variable register 320 holds map variable 314 that contains information about the positions, in a byte orientated source pool 302, of component elements selected from data elements A₀ through H₇ that form a new manipulated operand 328 for instruction 318. Map variable register 320 may be a special microprocessor register dedicated to data manipulation matrix module 300 or may be a standard register included within the architecture of microprocessor computer system 100 (FIG. 1).

As noted above, map variable 314 contains data element selection and mapping information. The information is packaged in a scheme accessible to an SIMD instruction 318 and to a module control unit 400 shown in FIG 4. As discussed in greater detail below, in one embodiment of the invention, module control unit 400 is a hardware unit of data manipulation matrix module 300 (FIG. 3A) configured to implement the actual replication of elements, as dictated by map variable 314, from source pool 302 onto destination register 304. Once physically copied to destination register 304, output elements, such as output element 306A contained in destination register partitions such as 306, are available as packed manipulated operand 328 for parallel execution by the microprocessor stages appropriate to the enabling SIMD instruction 318. Module control unit 400 (FIG. 4) references the sequence of data element labels comprising map variable 314 contained in map variable register 320, accesses the contents of source pool 302, and controls the replication of selected data elements A₀ through H₇, specified by map variable 314 (FIG. 3A), from source pool 302 onto destination register 304. According to one embodiment of the invention, map variable 314 dictates the nature of data element A₀ through H₇ mapping onto partitioned destination register 304 and module control unit 400 implements the actual mapping.

Referring again to FIG. 3A, as discussed above, map variable 314 comprises data element labels identifying which elements A₀ through H₇ to select from source pool 302. By operation of data manipulation matrix module 300, the data elements identified are mapped onto destination register 304 in the same order as identified in map variable 314.

Upon fetching, a SIMD instruction 318 requiring data manipulation enables data manipulation matrix module 300. In one embodiment, one or more marker bits (not shown) in the opcode of SIMD instruction 318 control enablement of data manipulation matrix module 300. To allow SIMD instruction 318 to access the functionality of data manipulation matrix module 300, the opcode marker bits of SIMD instruction 318 operate switches (not shown) that activate data manipulation matrix module 300. According to one embodiment of the invention, these marker bits designate whether corresponding operands in SIMD instruction 318 specify the location of the actual operand data in a microprocessor's register file, or, specify the location of map variables 314 required by data manipulation matrix module 300 to generate appropriately formatted manipulated operand 328. As discussed above, the enablement of data manipulation matrix module 300 is shown at 309 in process flow diagram FIG. 3B. Consequently, for SIMD instruction 318 to request the data manipulation functionality of data manipulation matrix module 300 for both operands of SIMD instruction 318, two marker bits are required in the opcode of SIMD instruction 318.

As also shown in FIG. 3A, according to one embodiment of the invention, the eight byte sequence of data element labels is encoded in eight byte (64-bit) map variable 314 contained in map variable register 320 partitioned on 1-byte granularity. In the example shown in FIG. 3A, the sequence of data element labels contained in map variable register 320, consists of the number base ten integers "57", "7", "7", "16", "63", "56", "58" and "0", respectively.

In FIG. 3A, data element H₁ is selected from source pool 302 by its identifying data element label "57" in the first partition of map variable register 320 for mapping onto the first partition of destination register 304. Likewise, the first occurrence of the data element label "7" in the second partition of map variable register 320 indicates that corresponding data element A₇ from source pool 302 is designated for mapping to the second partition of destination register 304. The second occurrence of the data element label "7" in the third partition of map variable register 320 indicates that corresponding data element A₇ is again designated for mapping, this time however, onto the third partition of destination register 320.

As described below, in one embodiment of the invention, module control unit 400 (FIG.4) provides for such duplicate mapping of an individual data element, such as A_{7,} onto multiple partitions of destination register 320, such as the second and third partitions as shown. Multicasting is the term generally used to described this mapping capability.

Similarly, data elements C_{0,} H₇, H₀, H₂, and A₀ are identified in source pool 302 by their corresponding data element labels "16", "63", "56", "58", and "0" in the third through eighth partitions of map variable register 320, respectively, for mapping onto the corresponding third through eighth partitions of destination register 304.

As will be appreciated by those of skill in the art, partitioning of data within source registers A-H, map variable register 320 and destination register 304 is virtual. The various registers are, in the current example, standard registers capable of containing 64 bits of data. For the purpose of implementing the byte-wise manipulation of data elements A₀ through H₇, data manipulation matrix module 300, accesses, processes and maps selected 1-byte (8-bit) portions of the 64 bits of data of the various registers. As will also be appreciated by those of skill in the art and as discussed above, according to one embodiment of the invention, all mapping of selected data elements from source pool 302 as output elements within partitioned destination register 304 may occur, in parallel, within one microprocessor clock cycle. In this and other embodiments of the present invention, data elements selected by data manipulation matrix module 300 from source pool 302 may, alternatively, be sent directly to a functional unit of microprocessor system 100 (FIG. 1), such as a floating point unit, as a manipulated operand 328 for immediate direct use by the functional unit in the execution of SIMD instruction 318 that enabled the data manipulation functionality of data manipulation matrix module 300.

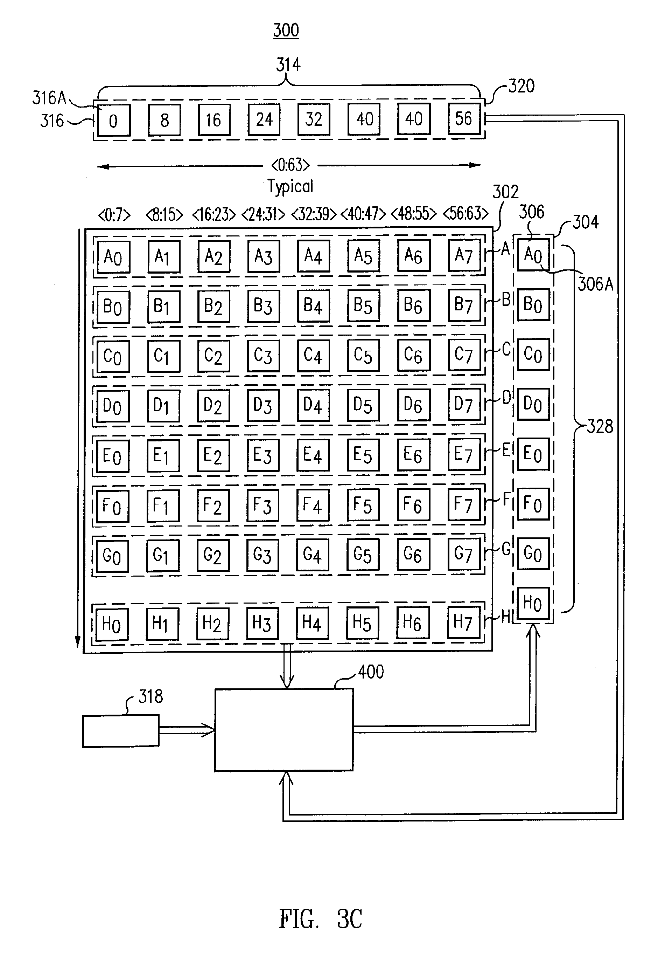

FIG. 3C is a schematic diagram illustrating the use of data manipulation matrix module 300 in accordance with the present invention in performing a reordering of column organized data elements into row organized data elements. In FIG. 3C, map variable register 320 contains data element labels "0", "8", "16", "24", "32", "40", "48", and "56", in the first through eighth partitions, respectively, of map variable register 320. If data manipulation matrix module 300 is enabled by a marker bit in the opcode of SIMD instruction 318, the first data elements of each register A through H are mapped as output elements to the first through eight partitions of destination register 304, respectively. Thus, a column to row transposition of the first data elements of each source register A through H is accomplished. Recall that in the prior art, as shown in FIG 2C, a column to row transpose required multiple merge instructions to complete the transpose operation.

Referring again to FIG. 4, in one embodiment of the invention, module control unit 400 includes two basic sub units, namely control switch 402 and control circuitry 404. In one embodiment of the invention, control switch 402 is a single stage network that can realize the connection of any data element A₀ through H₇ in source pool 302 (FIG. 3A) for copying to any output register partition in destination register 304, at any time, and with no possibility of blocking. As discussed above, at 313 in process flow diagram FIG. 3B control switch 402 is set to accomplish the desired mapping.

One possible solution for implementing all possible byte-wise, multi-cast, non-blocking mappings of selected date elements onto destination register 304 (FIG 3A) is a crossbar type control switch 502 (FIG. 5), well known to those skilled in the art. Crossbar switches are frequently utilized to perform network switching functions and to perform bus interconnect in a variety of microprocessors. FIG. 5 is a schematic diagram illustrating a crossbar type control switch 502 embodiment of control switch 402 (FIG.4) included within module control unit 400 (FIG.4) in accordance with one embodiment of the present invention. As shown in FIG. 5, according to one embodiment of the invention, crossbar switch 502 is a rectangular switch array for which each data element/output element combination has a switch element, such as exemplary switch element 526. Each switch element 526 is capable of selectively connecting one corresponding data element/output element combination. Control switch 502 is intended to switch data elements selected from A₀ through H₇ (FIG. 3A) to specific partitions of destination register 304 (FIG 3A) with a byte-wise granularity i.e., there is no requirement for bit shuffling within data element bytes. The first bit in the data element byte will always be the first bit in the destination register byte.
Consequently, in one embodiment of the present invention, in order to facilitate this byte-wise switching, crossover control switch 502 may gang eight switch elements 526 for each input output combination to switch all eight bits of selected data element bytes simultaneously as a unit. Eight switch elements 526 will operate simultaneously as a unit if all eight switch elements 526 are enabled by a common control line.

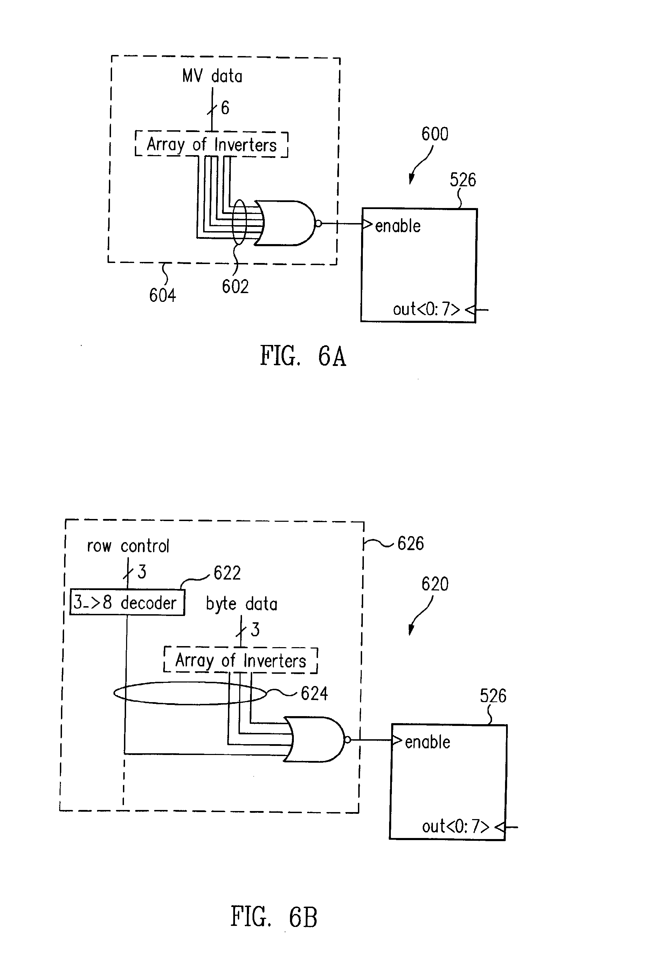

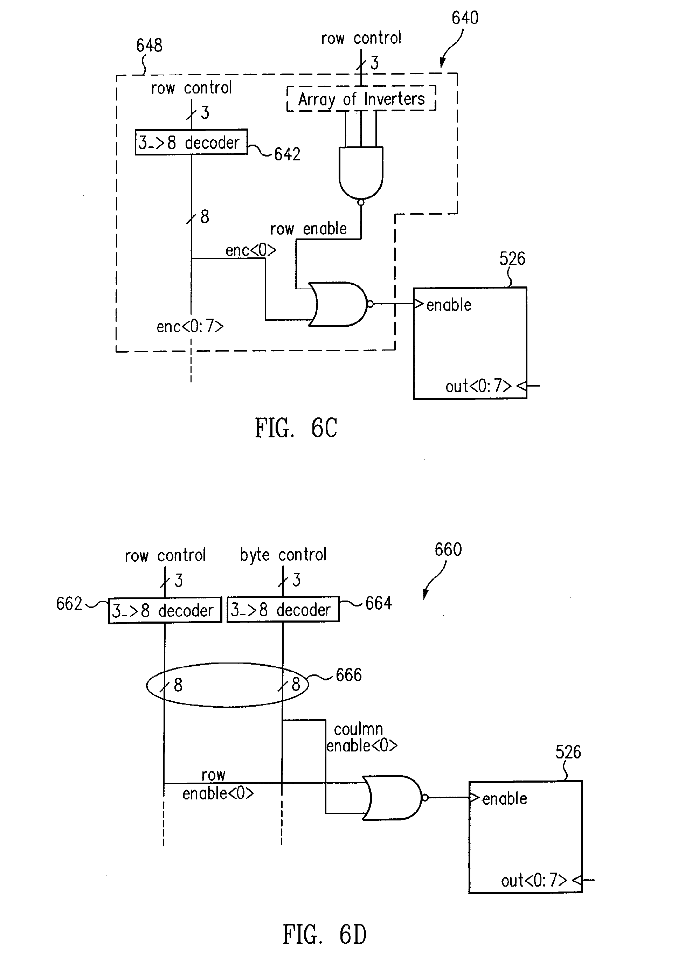

Referring again to FIGs. 3A, 4 and 5,the operation of a control switch 402 (FIG. 4) in accordance with one embodiment of the present invention is now discussed. In one embodiment of the invention, as shown in FIGs. 3A, 4, and 5, control switch elements, such as exemplary switch element 526 in crossbar control switch 502 (FIG.5), are selectively enabled or disabled based on the application of a number of control signals (602 in FIG. 6) issued by control circuitry 404 (FIG. 4). As shown in FIG. 3A, in one embodiment of the invention, the switching to be performed by control switch 402 (FIG.4) of module control unit 400 (FIG.s 3A and 4) is specified on a per clock cycle basis by map variable 314, with the generation of each output element, such as output element 306A (FIG. 3A) being controlled by a data element label, such as data element label 316A comprising data "57₁₀" (integer fifty-seven expressed in number base 10), contained in partition 316 of map variable 314 or directly within an operand of SIMD instruction 318.

With control switch 402 supporting sixty-four 1-byte data elements A₀ through H₇ (FIG. 3A), in binary representation only the low 6-bits 330 of each 1-byte partition in map variable 314 contains pertinent information (2⁶ = 64₁₀) . As shown in Fig. 3A, in one embodiment of the invention, within 6-bits 330, the most significant 3-bits 332 specify the specific 64-bit data register, such as the eighth data register H, while the remaining least significant bits 334 specify the partition location of the required 1-byte element within the specified register , such as the second partition 310 containing data element 310A comprising data "H₁". Bits 330 must be decoded such that, out of all of the cross connects in control switch 402, only the switch elements facilitating the routing of the stipulated data elements A₀ through H₇ (FIG. 3A) to the desired 1-byte partition of output register 304 (FIGs. 3A and 5) are enabled. The information contained in the map variable 314 can be decoded using a number of different approaches.

FIGs. 6A through 6D are a series of schematic diagrams illustrating embodiments of control circuitry 404 in accordance the present invention. In one embodiment of the control circuitry of invention 600 as shown in FIG. 6A, six control signals 602 associated with each conceptual column in the control switch 402 must be decoded on a switch element basis. This "no pre-decoding" approach minimizes the number of control lines 602 that are required in control switch 402 (FIG.4), but increases the control logic 604 that must be associated with each switch element

As illustrated in Figure 6B, one embodiment of the control circuitry of invention 620 uses a number of 3X8 decoders 622 to partially decode map variable 314 (FIGS. 3A and 5). In this embodiment, the register-stipulating portion of map variable 314 (the upper 3-bits 332 (FIG.3A), of the pertinent information) is expanded and passed unencoded into control switch 402 (FIG. 4). This "register pre-decoding" approach increases the number of control lines 624 required per column to eleven, but leads to a significant simplification of the control logic 626 required on a per switch element basis.

As illustrated in Figure 6C, one embodiment control circuitry of the invention 640 also uses a number of 3X8 decoders 642 to partially decode map variable 314 (FIG. 3A). In this embodiment of the invention, information about the location of the required 1-byte partition, such as partition 316, within a register A through H of source pool 304 is expanded (the low 3-bits 332 (FIG. 3A) per map variable byte) and passed unencoded into control switch 402 (FIG. 4).

As illustrated in Figure 6D, in one embodiment of the control circuitry of the invention 660, complete 3 to 8 source register 662 decoding and 3 to 8 1-byte data element decoding 662 is undertaken outside control switch 402 (FIG. 4), on map variable 314 (FIG. 3A) control information. This "complete decoding" approach requires sixteen control lines 666 (FIG. 6D).

As discussed above, the present invention provides SIMD instructions with a new mode of operation in which SIMD instructions indicate that the operands stipulated in the instructions do not reference the data on which the instructions are to operate, but rather are map variables that contain information about the positions, in a byte orientated source pool of data, of component elements of the instruction's operands. Upon the dispatch of these instructions, the information contained in these map variables is decoded by the module control unit of the data manipulation matrix module of the present invention, which in turn generates, from the byte data elements contained in the source pool, the specified partitioned manipulated operands. These manipulated operands are then passed to the relevant functional stage, in lieu of the original operand data referenced by the SIMD instructions.

While the invention has been particularly shown and described with reference to specific embodiment thereof, it will be understood by those skills in the art that various other changes in the form and details may be made. Accordingly, these and other variations are equivalent to the specific implementations and embodiments described herein.

## Claims

1. A microprocessor module comprising:
a source pool comprising a plurality of partitioned source registers containing a set of data elements;
at least one partitioned destination register;
at least one partitioned map variable register;
a module control unit coupled to said source pool, said at least one partitioned destination register, and said partitioned map variable register;
at least one map variable contained in said at least one partitioned map variable register, wherein said at least one map variable directs said module control unit to select a subset of said set of data elements from said source pool and to perform an ordered replication of said subset of said set of data elements onto said partitioned destination register.

2. The microprocessor module of Claim 1, wherein said module control unit comprises:
a control switch; and
control circuitry coupled to said control switch.

3. The microprocessor module of Claim 2, wherein said control switch is a crossbar switch.

4. The microprocessor module of Claim 2 or 3, wherein said control circuitry comprises a plurality of n to m decoders to decode said map variable.

5. The microprocessor module of Claim 4, wherein said plurality of n to m decoders decodes a register-stipulating portion of said map variable.

6. The microprocessor module of Claim 4, wherein said plurality of n to m decoders decodes a partition-stipulating portion of said map variable.

7. The microprocessor module of Claim 4, wherein said plurality of n to m decoders decodes a register-stipulating portion of said map variable and a partition-stipulating portion of said map variable.

8. The microprocessor module of Claim 5, 6 or 7 wherein n equals 3 and m equals 8.

9. The microprocessor data manipulation module of any one of the preceding claims, wherein said at least one map variable comprises an operand of a microprocessor SIMD instruction.

10. The microprocessor data manipulation module of any one of the preceding claims, wherein said replication is non-blocking.

11. The microprocessor data manipulation module of any one of claims 1 to 9, wherein said replication is byte-wise.

12. A microprocessor module comprising:
a source pool comprising a plurality of partitioned source registers containing a set of data elements ;
at least one partitioned destination register;
at least one partitioned map variable register;
a module control unit coupled to said source pool, said at least one partitioned destination register, and said at least one partitioned map variable register,
wherein said module control unit comprises:
a crossbar switch; and
control circuitry coupled to said crossbar switch,
wherein said control circuitry comprises a plurality of n to m decoders to decode said map variable;
at least one map variable comprising an operand of a SIMD instruction and contained in said at least one partitioned map variable register, wherein said at least one map variable directs said module control unit to select a subset of said set of data elements from said source pool and to perform an ordered replication of said subset of said set of data elements onto said partitioned destination register.

13. A microprocessor module within a microprocessor comprising:
a source pool comprising a plurality of partitioned source registers containing a set of data elements;
a module control unit coupled to said source pool and at least one functional unit of said microprocessor;
at least one map variable specified by an operand of an SIMD instruction executable by said at least one functional unit of said microprocessor;
wherein said at least one map variable directs said module control unit to select an ordered subset of said set of data elements and to send said ordered subset to said at least one functional unit; and
wherein said at least one functional unit executes said SIMD instruction on said ordered subset of said set of data elements.
